# EUROPEAN PATENT SPECIFICATION

(11) **EP 3 089 945 B1**
(45) Date of publication and mention of the grant of the patent: **20.02.2019**
(21) Application number: 14824917.0
(22) Date of filing: 30.12.2014
(51) Int. Cl.: C02F 1/24

(54) **PROCESS**
VERFAHREN
PROCÉDÉ

(30) Priority: 31.12.2013 GB 201323151
(43) Date of publication of application: 09.11.2016
(73) Proprietor: United Utilities Plc., Warrington WA5 3LP (GB); Nijhuis Water Technology B.V., 7007 CD Doetinchem (NL)
(72) Inventor: LE, Minh Son, Cheshire CW9 8NB (GB); MENKVELD, Hendrik Willem Herman, NL-7007 CD Doetinchem (NL)
(74) Representative: Cozens, Paul Dennis
(86) International application number: PCT/GB2014/053853
(87) International publication number: WO 2015/101784

(56) References cited:
- EP-B1- 2 188 223
- WO-A1-01/51164
- US-A- 4 251 361
- US-A- 4 253 949

## Description

The present invention relates to a method for the generation of white water. In particular, the present invention relates to a method which utilises gravity in the production of white water for use in Dissolved Air Flotation processes.

Dissolved Air Flotation (DAF) is a process which involves removing suspended solids, oils and other contaminants via the use of white water. DAF is a proven and effective physical/chemical technology for treating a variety of industrial and municipal process and wastewater streams. DAF systems are commonly used for the removal of oils and greases and suspended solids to meet a variety of treatment goals including for example:
i) the removal of colour and turbidity in potable water treatment;
ii) product recovery and reuse;
iii) pre-treatment to meet sewer discharge limits;
iv) pre-treatment to reduce loading on downstream biological treatment systems;
v) polishing of biological treatment effluent; and
vi) the thickening of bio-solids.

In the operation of a DAF process, air is dissolved to super-saturation in a certain percentage of clean effluent water, which is then mixed with a process stream where the air is released from solution as micro-bubbles while in intimate contact with contaminants.

A mixture of micro-bubbles in water is commonly known as 'white water'. The micro-bubbles attach to solids, increase the buoyancy of same and thereby float the solids to the surface of the water in a DAF separation chamber. Chemical pre-treatment for example with coagulants and flocculants often assists this process and improves the performance of contaminant removal.

Typically, the rate of recycling of the clean effluent is 6 to 10% of the rate of flow through the DAF separation chamber, and the air pressure in an associated saturation vessel is 400 to 600kPa. The amount of air that is needed to maximise flotation is however, generally independent of the contaminant concentration. The air dose does however need to be in the region of between 8 to 10 g of air per m³ water to be treated in normal operation.

Air may be dissolved in the stream of recycled water using a variety of methods. For example, in a conventional DAF system, a recycle pump combined with a saturation vessel, and air compressors are used to dissolve air into the water. The most common design involves passing the water downwards through a vessel known as a saturator, containing a packing whilst air is injected at a slightly greater pressure into the base of the saturator vessel. The air dissolves into the water as it cascades down through the packing and the water saturated with air is taken from the base of the saturator vessel. The pressurised water is fed as required to a separation chamber. The pressure of the recycled water must be sustained until it is released through orifices into pre-treated water entering the separation chamber. Any reduction in pressure between the outlet of the saturator and a release valve or orifice results in premature release of air from solution and a corresponding reduction in efficiency of the recycle stream. Maintaining pressure to the point of release ensures an ideal bubble size of between 40 to 80 µm is achieved. This type of system, while effective, is expensive, labour intensive and has the disadvantage that it prone to destabilisation of the point of equilibrium, creating 'burps' in the system due to incorrect, loss or creeping of the point of equilibrium. This kind of operation may also increase chemical consumption.

It will be appreciated that a substantial part of the cost of the DAF system relates to the provision of high pressure equipment that includes a recycle pump, saturation vessel, and air compressor. Such process systems and components are also expensive to maintain and require very high power consumption for operation thereby hugely disadvantaging process operators even further.

For example, the use of smooth conduits, and the control of particulate matters in liquids such as water are important considerations. In particular it has been found that the amount of particulate matter in the liquid must be kept below of 1,000 mg/L. More preferably, the amount of particulate matter in the liquid is ideally kept below 100 mg/L.

It will be appreciated that the use of gravity or a high hydrostatic pressure of a water column to enhance the solubility of oxygen in water is well known, particularly in oxygen transfer applications. For example, the use of U-tube aerators in fish farming; however in this case super-saturation is avoided to prevent the formation of micro-bubbles in blood which would be fatal to the livestock.

Hines et al. (US 4,253,949) describes a sewage treatment apparatus wherein the sewage containing dissolved air is circulated around a system comprising a down-comer and a riser, part of the mixture in the riser being introduced into a flotation chamber in which the hydrostatic pressure gradually decreases as the mixture flows upwards, with consequent release from solution of air bubbles which carry the micro-organisms to the top of the mixture. The devices described by Hines et al. are commonly known as air-lift reactors and have been used predominantly for fermentation processes such as the ICI single cell protein production. Such devices are however constructed substantially underground and therefore at great cost.

Furthermore air has to be compressed to very high pressure to enable injection close to the bottom of the reactor. More importantly, the presence of micro-organisms in very high concentration does not allow the system to reach a high degree of super-saturation necessary for a DAF process.

European Patent EP 2188223 B1 describes a method and apparatus for aerating a liquid wherein the liquid to be treated is drawn down a vertical pipe at a predetermined velocity to entrain air bubbles into the moving liquid forming an air liquid mixture, maintaining the air bubbles in liquid contact for a minimum period under increasing hydrostatic pressure to dissolve the air and returning the aerated liquid to the reactor. The air bubbles are generated close to the surface of the liquid above an inlet of the vertical pipe. Whilst EP 2188223 describes a process for sewage treatment, just as with the invention by Hines et al, the invention described therein is not suitable for the production of white water, and there is no teaching that could be applied for the production of micro-bubbles suitable for use in a DAF process.

Document US4251361 discloses separating an oil / water mixture in a gas flotation separator.

Methods for forming a reduced pressure air/water mixture are also known. For example, a low pressure air source may be injected into a stream of water using suitable nozzles or diffusers to produce an air/water mixture. Alternatively, a low pressure air/water mixture may be created using a self-aspirating pump which draws air and water simultaneously through separate inlets into a pump cavity where a pump impeller action causes the air to be broken into bubbles in water. The bubbles in such air/water mixtures are however coarse bubbles and possess a size generally greater than 1mm.

There is therefore a requirement for a suitable method for the generation of white water or the production of super-saturated air in water for operation of dissolved air flotation processes (DAF).

It is therefore the aim of the present invention to provide an improved method for the generation of white water for the operation of DAF processes.

According to the present invention there is provided a method of affecting a Dissolved Air Flotation (DAF) according to claim 1.

In relation to the present invention the process stream is a contaminated stream to be treated.

The method of the present invention has the advantage that is does not involve the use of high pressure equipment, but instead uses equipment that is simple in design and therefore cost effective to produce. Furthermore, the method of the present invention had the additional advantage that it also energy efficient using only a relatively small amount of power.

In relation to the method of the present invention the reduced pressure air/water mixture is preferably formed using a self-aspirating pump.

In addition, the elevated hydrostatic pressure in the water column is preferably provided by a U-tube housed within a bore hole at a minimum depth of 40m.

The particulate matter in the water is less than 1,000 mg/L. More preferably, the particulate matter in the water is less than 100 mg/L.

The hydrostatic pressure is in excess of 400 kPa. More preferably the elevated hydrostatic pressure is in excess of 600 kPa.

Air is normally only sparingly soluble in water under normal atmospheric conditions. However, according to Henry's law, the solubility of a gas in a liquid is dependent on the gas pressure, therefore, the higher the pressure of the liquid, the greater the solubility of the gas. Thus, when a gas and a liquid are brought into contact, the gas will dissolve in the liquid until equilibrium is reached. When the liquid holds more dissolved gas than the amount possible under conditions of equilibrium, the liquid is said to be 'super-saturated' and the state is known as 'super-saturation'. Super-saturation often exists when the pressure of an equilibrated system is suddenly reduced, for example when a bottle of carbonated drink is opened.

As the dissolved gas leaves the soluble state it first forms micro-bubbles, that is, bubbles under 100 µm in size. This process of gas disengagement takes a finite time. Super-saturation normally exists for only a very brief moment of time, but it has been found that such an unstable state may be pro-longed for an extended time if certain physical factors prevail. For example, if the cap of a bottle of carbonated drink is very gently twisted to open then very little 'fizz' is produced. Conversely, if carbonated water is shaken violently, then rapid disengagement of the dissolved gas results.

Similarly, it has been found that the presence of large amounts of particulate matter in a liquid accelerate gas disengagement processes. Likewise, when considering industrial process situations, any contact with rough surfaces, for example the surface of pipe or conduit is unfavourable for gas dissolution in the first instance and for maintenance of super-saturation thereafter. There should therefore be the ability to dissolve air in water efficiently and also the ability to be able to control the disengagement of the air from water in a precise manner.

In relation to the present invention a suitably elevated hydrostatic pressure may be generated by the weight of water in a column such as a vertical pipe. It is necessary to generate a hydrostatic pressure in excess of at least 400 kPa. More preferably the hydrostatic pressure is in excess of 600kPa which requires the column to be at least 40 metres high. In order to accommodate such a structure it is convenient to house the vertical pipes in a borehole or even supported in very tall buildings such as skyscrapers.

Parallel pipes or tubes are conveniently used as down-comer and riser conduits. As the low pressure air/water mixture travels through the down-comer it encounters progressively greater hydrostatic pressure and more and more air dissolves into the water as dictated by Henry's law. The air/water mixture is designed such that ideally all the air has dissolved by the time the mixture reaches the bottom of the down-comer, that is, the point of maximum hydrostatic pressure. As the air in water solution travels upward through the riser the hydrostatic pressure is progressively reduced and the degree of super-saturation is increased.

In order to maintain a state of super-saturation, it is important that the solution is not subjected to turbulence and rough surfaces. Laminar flow in smooth pipes is the best way to ensure a prolonged state of super-saturation.

Therefore, a super-saturated air solution in water needs to be handled with the greatest care in order to avoid premature disengagement of the air from solution. If the distance from the exit of the borehole to the process stream where the generation of the white water is required is significant, then it may be necessary to maintain the solution under a minimum pressure, that is, a pressure of 100kPa, until the white water is required. This may be conveniently achieved with the use of a back pressure valve upstream of the discharge point of the air solution.

For a better understanding of the present invention and to show more clearly how it may be carried into effect, the invention will now be described further by way of the following examples and drawings which will now be discussed below.
Figure 1a - illustrates a schematic representation of a system in accordance with the present invention;
Figure 1b - illustrates an air/water mixture at the entrance to a down comer showing air bubbles with a typical size of 2mm; and
Figure 2 - illustrates a series of time lapsed photographs A to D, of a super-saturated solution of air in water undergoing a process of air disengagement taking 90 seconds to complete.

### EXAMPLE 1

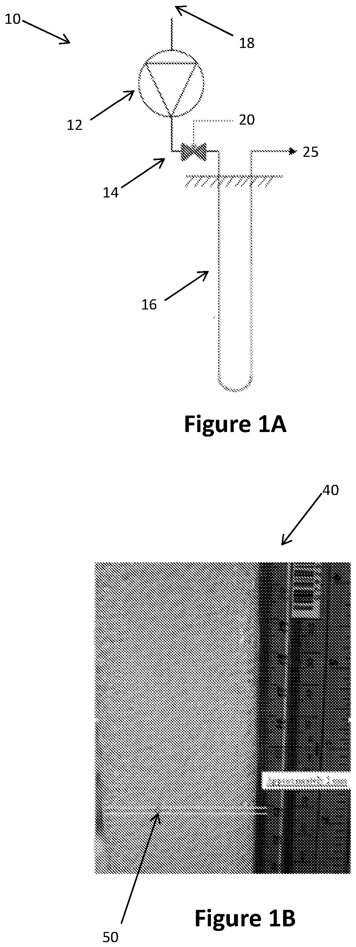

A system was constructed to demonstrate the method of the present invention and is illustrated in Figure 1. The system (10) comprises a pump (12) in the form of a centrifugal pump. Air (20) is drawn into a water stream (18) to form a 'low' pressure air/water mixture using a venturi device (14). The air/water mixture is then injected into a U-tube (16) with 50 mm diameter housed in a borehole of 100 metre depth.

The liquid flow was maintained in the region of 1.5 litres/second, (L/s). Air entrainment was 6% volume of air to volume of water or equivalent to provide 78 g air per m³ water.

The liquid velocity was calculated to be in the region of 0.8 metres/second. In addition, as illustrated in Figure 1b, the average size of the bubbles in the air/water mixture at the entrance to a down-comer was approximately 2mm.

The inventors have also found that bubble transportation down a vertical pipe is directly affected by the liquid velocity. That is, the minimum liquid velocity necessary to ensure the transport of a 2mm sized bubble downwards was found to be at least 0.52 metres/second or a flow rate of 1 litre/second in a 50mm diameter pipe.

In the present example it was found that the water emerging from a riser pipe was supersaturated with air. It was estimated that the water contained 78 g dissolved air per m³ water.

### EXAMPLE 2

The 'final' effluent from a sewage treatment works was used as the feed water to investigate white water production using the system described above in Example 1 in which all physical components are the same. The term 'final' effluent mentioned above refers to the effluent obtained during the last treatment step in the process of treating sewage and involves a sedimentation step after the activated sludge treatment process.

The water flow rate was in the region of 5.5m³ per hour. The supply of air by the venturi device was 1.8 m³ per hour. It was found that the water emerging from the riser pipe contained super-saturated air in solution.

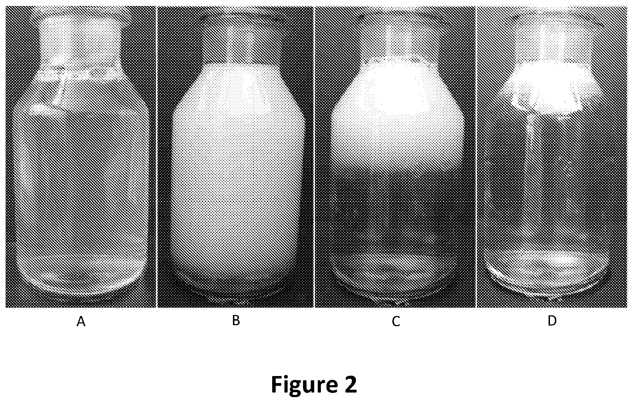

The amount of air in super-saturation was calculated to be at least 18 times the normal amount of dissolved air under atmospheric conditions. It was also found that under atmospheric conditions the state of super-saturation persisted for at least 10 seconds before the onset of micro-bubbles (25). The process of disengagement of the air from the super-saturated solution took 90 seconds to complete as illustrated by the series of time-lapsed photographs A to D depicted in Figure 2.

Thus example 2 illustrates that the quality of the 'final' effluent was suitable for white water generation. That is, it did not contain too much particulate matter.

It will be appreciated that many modifications and enhancements may be made to the method and product outlined herein. For instance, the methods of forming the reduced pressure air/water mixture may be varied, for example by using surface aerators or down-draught mixers. Other possible modifications will be readily apparent to the appropriately skilled person.

## Claims

1. A method of affecting a Dissolved Air Flotation (DAF) processes, the method comprising the steps of:
i) forming a reduced pressure air/water mixture, wherein particulate matter in the water is less than 1,000 mg/L;
ii) subjecting the air/water mixture to an elevated hydrostatic pressure that is in excess of 400 kPa in a water column to achieve substantial dissolution of air in water;
iii) removing the air in water solution from the elevated hydrostatic pressure region to form a super-saturated air in water solution; and
iv) introducing the super-saturated air in water solution into a process stream wherein the air is released from solution as white water micro-bubbles that are less than 100 µm in size while in intimate contact with contaminants to perform Dissolved Air Flotation.

2. A method according to claim 1 wherein the reduced pressure air/water mixture is formed using a self-aspirating pump.

3. A method according to claim 1 or 2 wherein the elevated hydrostatic pressure in the water column is provided by a U-tube housed within a bore hole at a minimum depth of 40m.

4. A method according to any of claims 1 to 3 wherein particulate matter in the water is less than 100 mg/L.

5. A method according to any of claims 1 to 4 wherein the elevated hydrostatic pressure is in excess of 600 kPa.

## Patentansprüche

1. Verfahren zum Beeinflussen eines DAF(Dissolved Air Flotation; Entspannungsflotation)-Prozesses, wobei das Verfahren die folgenden Schritte umfasst:
i) Bilden eines druckreduzierten Luft/Wasser-Gemischs, wobei Partikel in dem Wasser weniger als 1000 mg/l betragen;
ii) Aussetzen des Luft/Wasser-Gemischs einem erhöhten hydrostatischen Druck über 400 kPa in einer Wassersäule zur Erzielung einer beträchtlichen Dissolution von Luft in Wasser;
iii) Entfernen der Luft-in-Wasser-Lösung aus dem Bereich mit erhöhtem hydrostatischen Druck zur Bildung einer übersättigten Luft-in-Wasser-Lösung; und
iv) Einleiten der übersättigten Luft-in-Wasser-Lösung in einen Prozessstrom, wobei die Luft während des engen Kontakts mit Verunreinigungen zur Durchführung von DAF als Weißwasser-Mikroblasen, die eine Größe von weniger als 100 µm aufweisen, freigesetzt wird.

2. Verfahren nach Anspruch 1, wobei das druckreduzierte Luft/Wasser-Gemisch unter Verwendung einer selbstsaugenden Pumpe gebildet wird.

3. Verfahren nach Anspruch 1 oder 2, wobei der erhöhte hydrostatische Druck in der Wassersäule durch ein U-Rohr bereitgestellt wird, das in einem Bohrungsloch mit einer Mindesttiefe von 40 m untergebracht ist.

4. Verfahren nach einem der Ansprüche 1-3, wobei Partikel in dem Wasser weniger als 100 mg/l betragen.

5. Verfahren nach einem der Ansprüche 1-4, wobei der erhöhte hydrostatische Druck mehr als 600 kPa beträgt.

## Revendications

1. Procédé pour affecter des processus de flottation à air dissous (DAF), le procédé comprenant les étapes suivantes :
i) former d'un mélange air/eau à pression réduite, des matières particulaires dans l'eau étant inférieures à 1000 mg/L ;
ii) soumettre le mélange air/eau à une pression hydrostatique élevée dépassant 400 kPa dans une colonne d'eau pour réaliser une dissolution sensible de l'air dans l'eau ;
iii) extraire l'air dans la solution d'eau de la région de pression hydrostatique élevée pour former un air sursaturé dans la solution d'eau ; et
iv) introduire l'air sursaturé dans la solution d'eau dans un flux de processus, l'air étant libéré de la solution sous forme de microbulles d'eau blanche ayant une taille inférieure à 100 µm lorsqu'elles sont en contact intime avec des contaminants pour effectuer une flottation à air dissous.

2. Procédé selon la revendication 1, dans lequel le mélange air/eau à pression réduite est formé en utilisant une pompe auto-aspirante.

3. Procédé selon la revendication 1 ou 2, dans lequel la pression hydrostatique élevée dans la colonne d'eau est fournie par un tube en forme de U logé à l'intérieur d'un trou d'alésage à une profondeur minimale de 40 m.

4. Procédé selon l'une quelconque des revendications 1 à 3, dans lequel les matières particulaires dans l'eau sont inférieures à 100 mg/L.

5. Procédé selon l'une quelconque des revendications 1 à 4, dans lequel la pression hydrostatique élevée dépasse 600 kPa.
